# EUROPEAN PATENT APPLICATION

(11) **EP 1 177 851 A2**
(43) Date of publication of application: **06.02.2002**
(21) Application number: 01110960.0
(22) Date of filing: 07.05.2001
(51) Int. Cl.: B23K 11/00, B21F 27/10, B23P 15/12

(54) **Loading device for metal wires and relative method**

(30) Priority: 11.05.2000 IT UD000095
(71) Applicant: IMPIANTI INDUSTRIALI Spa, I-33010 Osoppo (UD) (IT)
(72) Inventor: D'ARONCO, Giovan Battista, 33100 Udine (IT); PITTINI, Andrea, 33019 Tricesimo (IT)
(74) Representative: Petraz, Gilberto Luigi

(57) **Abstract**

Loading device (10) for metal wires, used to position at least a metal wire (11) in correspondence with at least an attachment position with at least another metal wire (14), comprising at least a gripping and positioning assembly (15) able to move cyclically from a first position (I) wherein it grips said metal wire (11) to a second position (II) wherein it releases said wire (11) in correspondence with said attachment position, said gripping and positioning assembly (15) comprising at least a pair of gripping elements (16a, 16b) movable in synchronized fashion on respective planes and able to act on respective transverse wires (11a, 11b), the movement of a first gripping element (16a) being temporally staggered with respect to the movement of said second gripping element (16b).

## Description

### FIELD OF THE INVENTION

The invention concerns a loading device for metal wires, and the connected method of loading and feeding metal wires to at least a welding assembly.

The invention also concerns a mesh-forming machine which uses the device and method.

The invention is applied preferentially, although not only, on machines which make metal mesh or reinforcement elements used in the building field or other similar application.

### BACKGROUND OF THE INVENTION

The state of the art includes devices to automatically feed metal wires or round pieces to welding machines to make mesh or reinforcement cages, for example used in the building field or in other similar or comparable applications.

Metal mesh consists of a plurality of longitudinal wires or round pieces on which corresponding transverse wires or round pieces are welded with an interaxis pre-set according to the design specifications.

Normally, automatic machines for the production of reinforcement mesh comprise mechanisms suitable to make said longitudinal wires advance step-wise, and at least a loading device which positions, on each occasion and for every advance step of the longitudinal wires, one or more transverse wires in correspondence with at least one pre-set welding position. When welding has been completed, the longitudinal wires are moved forwards, all together, by one step, and the loading device picks up and positions at least one new transverse wire in correspondence with the relative welding position. The transverse wires are normally fed from a reel or bobbin, and, upstream or downstream of the loading device, there is a device for cutting to size which is activated with every welding cycle.

The device for loading the transverse wires normally comprises a plurality of gripping elements, generally assembled coaxial on the same shaft, suitable to perform a cyclical movement from a first position wherein they pick up the transverse wire, fed by appropriate means in at least one loading seating, to a second position wherein they release said wire in the welding position.

Then, the gripping elements return to their starting position to pick up and position one or more new wires.

In the state of the art, various methods and devices have been proposed and adopted with the purpose of reducing the cycle times connected to picking up and positioning the transverse wires and consequently of increasing the productivity of the mesh-forming machines.

Various conventional embodiments provide that, when a first transverse wire is picked up by the gripping elements and displaced towards the welding position, a new transverse wire is fed and positioned in the loading seating, so as to reduce the dead times of the cycle. Although this embodiment is an improvement, it is not completely satisfactory since it does not allow to achieve the desired speeds and productivity because it does not completely eliminate the dead times connected with the return of the gripping element to the pick-up position.

Another problem with conventional loaders is that the wire is not safely gripped and held by the gripping elements during the positioning movement. The gripping elements generally have elastic or mechanical mechanisms to grip and release the wire, and these entail breakages, malfunctions, or in any case the need for frequent maintenance in order to keep efficiency high.

The present Applicant has devised and embodied this invention to overcome the shortcomings of the state of the art and obtain further advantages, particularly to increase the speed of feed of the transverse wires and hence to increase productivity.

### SUMMARY OF THE INVENTION

The invention is set forth and characterized in the respective main claims, while the dependent claims describe other characteristics of the main embodiment.

The loading device according to the invention comprises a plurality of gripping assemblies arranged substantially aligned parallel to the direction defined by the position of the transverse wire to be loaded; these assemblies are movable simultaneously in the steps of picking up one or more transverse wires from at least one feed seating and of positioning it in correspondence with at least one welding position.

The assemblies can vary in number according to the length of the transverse wires and/or the size of the machine, and can vary from one to, normally, about ten or more.

It comes within the field of the invention to provide two or more of said loading devices, for example arranged specular to each other, on the same mesh-forming machine.

According to the invention, each of said assemblies consists of at least two gripping elements, respectively first and second, slightly staggered lengthwise and movable in synchronized fashion on respective planes.

In a preferential embodiment, the first gripping elements of each assembly are associated with a first common movement system, while the relative second gripping elements are associated with a second common movement system.

The activation of the movement systems is governed by a command system which determines a mechanical or electric synchronization thereof. The command system can comprise a single electric, pneumatic or hydraulic motor or actuator, or two or more motors or actuators, distinct and synchronized.

Each of the gripping elements is able to perform a cyclical movement from a first position, wherein it picks up a transverse wire from the relative feed seating, to a second position wherein it releases it in correspondence with a welding seating, and then returns to the first position.

According to the invention, the movement of the first gripping element is temporally staggered with respect to the movement of the relative second gripping element.

In a preferential embodiment, the stagger is substantially equal to half a cycle, so that when one first gripping element is in the first position, to pick up a relative transverse wire, the second gripping element is in the release position, and vice versa.

The loading cycle of a transverse wire provides that one wire is picked up from the feed seating, by means of the respective first gripping elements of every assembly, and is taken in correspondence with the welding seating, while the respective second gripping elements of every assembly perform the inverse, return movement, from the welding position to the feed position.

In a preferential embodiment, the cyclical movement of the first gripping elements (the same sequence, however, is valid of the second elements too) provides:
- a substantially linear advance movement from the feed position to the welding position of a first transverse wire, with a subsequent release of the wire in the welding position;
- a lifting movement to prevent interference with the advance of the second gripping elements which carry a second transverse wire;
- a substantially linear retreat movement and
- a lowering movement to return to the position to pick up a subsequent transverse wire which has to be transferred to the welding position.

The embodiment described above allows to substantially reduce the dead times connected with the return movement of the gripping elements, since the return movement is coordinated with the advance movement of another gripping element with a new transverse wire. It comes within the field of the invention to provide three or more gripping elements for every assembly, with a synchronized and staggered movement, compatible with the times needed for the advance of the longitudinal wires and to perform the welding operations.

According to another characteristic of the invention, substantially on the bottom of its gripping seating, each gripping element has means to retain the wire.

In a preferential embodiment, said retention means consist of magnetic elements.

According to a variant, the retention means consist of electromagnetic means which can be activated/de-activated on command.

According to a further variant, the retention means consist of mechanical-type means, such as grippers, hooks, hollows or similar.

In this way, during the steps of gripping and releasing the respective wire, the device and method according to the invention guarantee a safe grip and prevent problems of correct functioning and maintenance, thus avoiding frequent downtimes of the machine.

### BRIEF DESCRIPTION OF THE DRAWINGS

These and other characteristics of the invention will be clear from the following description of the preferential embodiment, given with reference to the attached drawings wherein:
Fig. 1 is a side view of the loading device showing an assembly of gripping elements in a first operating position;
fig. 2 is a prospective view of the assembly of gripping elements in Fig. 1;
Figs. 3 and 4 show the assembly of gripping elements in Fig. 1 in two different operating positions;
Fig. 5 shows a detail of the gripping element used in the loading device in Fig. 1;
Fig. 6 is a schematic view of a mesh-forming machine to which the device in Fig. 1 is applied.

### DETAILED DESCRIPTION OF PREFERENTIAL EMBODIMENT

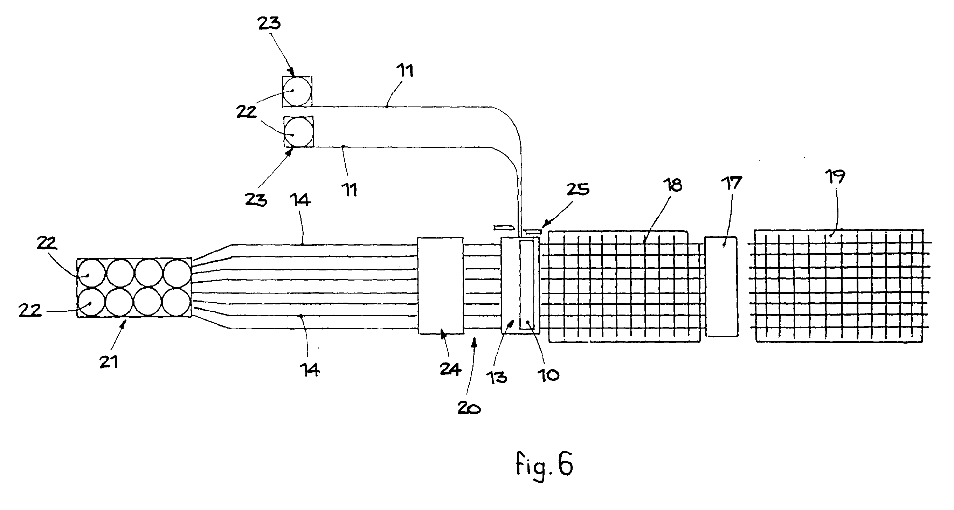

A mesh-forming machine, denoted in its entirety by the number 20, able to use a loading device 10 according to the invention is shown schematically in Fig. 6. The machine 20 comprises an assembly 21 to feed longitudinal wires 14, consisting of a plurality of reels or bobbins 22 from which said wires 14 are unwound, and at least an assembly 23 to feed a transverse wire 11 unwound from a respective reel 22.

In the case shown here, there are two assemblies 23 for the transverse wires 11, which can work together or in alternation in order to reduce the dead times caused by replacing the finished reels 22.

When there are two loading devices 10 associated with the same machine 20, for example arranged specular one opposite the other, one embodiment may provide that each loading device 10 is fed with a relative transverse wire 11 from a respective reel 22.

The longitudinal wires 14, possibly after passing through a straightener device 24, are fed to a welding assembly 13 to which, by means of said loading device 10, the transverse wire 11 is also fed.

In the embodiment shown here, upstream of the loading device 10 there is a shears 25 which cyclically shears to size the transverse wires 11 and supplies them to the device 10.

Every welding cycle provides a step of advance of all the longitudinal wires 14, and the positioning of said transverse wire 11 sheared to size in correspondence with the welding assembly 13. When welding has been performed, the longitudinal wires 14 advance by one step according to the interaxis of the design specifications, and a new transverse wire 11 is positioned in correspondence with the welding assembly 13, to progressively form a mesh 18.

Downstream of the welding assembly 13 there is a shears 17 for longitudinal wires able to shear to size the completed mesh 18, which is unloaded onto a collection bench 19 and then discharged. The transverse wire 11 can also be subjected to straightening and/or stretching passes before welding.

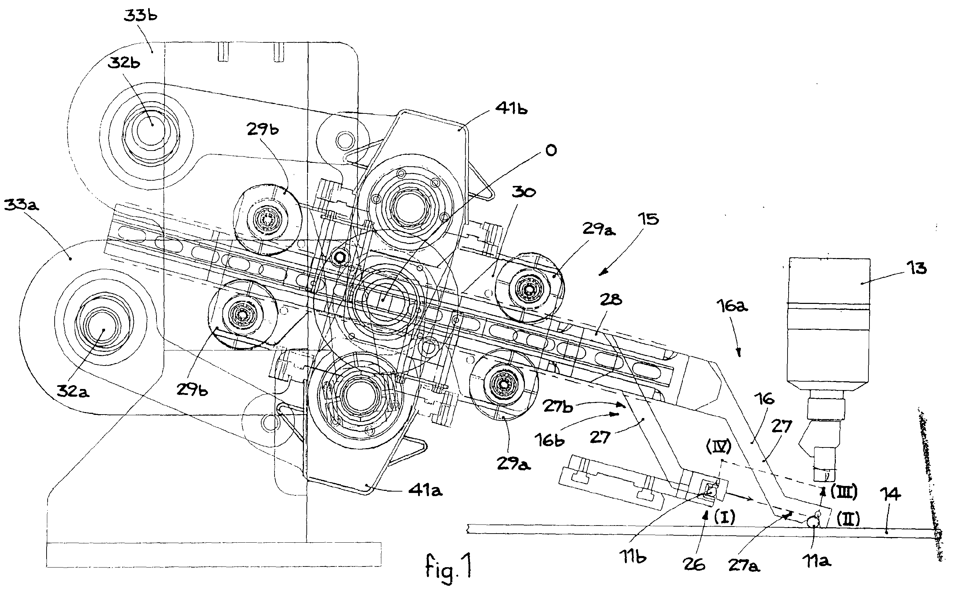

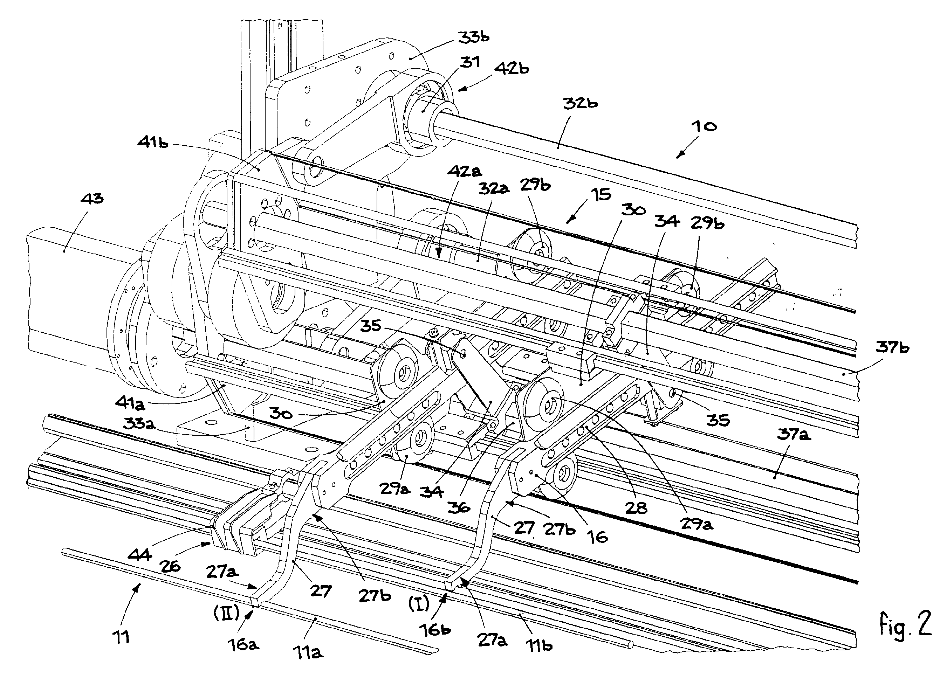

A loading device 10 according to the invention is shown partly in prospective view in Fig. 2 and in a side view in Figs. 1, 3 and 4.

It consists of at least a pick-up and positioning assembly 15, each one consisting of a pair of gripping elements 16, first 16a and second 16b, arranged slightly staggered one near the other in the direction at which the transverse wire 11 lies.

Even though Fig. 2 shows only one assembly 15, for reasons of simplicity, it comes within the field of the invention that the loading device 10 has a desired number of such assemblies 15, identical and arranged substantially aligned in a direction substantially parallel to the position of said transverse wire 11. The number of assemblies 15, which are activated simultaneously during the loading cycles of the transverse wires 11, varies according to the size of the machine 20 and/or the loading device 10, and can typically reach a maximum of about ten.

Each of said gripping elements 16 is able to move from a first gripping position (I), wherein it is suitable to pick up a first transverse wire 11, located in a feed channel 26 by appropriate translator means which are not shown here, to a second release position (II) wherein it positions said transverse wire 11 substantially in correspondence with the welding assembly 13.

The feed channel 26 is associated in conventional fashion with elastic means 44 to retain the wire 11, able to be opened at the moment the gripping elements 16a, 16b pick up the wire 11.

The wire is released by the gripping elements 16 in the welding position, according to a preferential embodiment, by closing the clamping elements of the welding assembly 13, which retain the wire and release it from the gripping elements 16 at the beginning of the return movement of the latter.

Even if the embodiment shown here provides that the two gripping elements 16a, 16b pick up a relative transverse wire 11 from the same channel 26, it comes within the field of the invention to provide two or more channels 26, possibly fed by two or more reels 22, from each of which the elements 16a, 16b pick up a relative wire 11.

Once the transverse wire 11 has been placed in the welding position, each gripping element 16 makes an inverse return movement to pick up a subsequent wire 11.

According to the invention, the drive of the two gripping elements 16a and 16b of each assembly 15 is temporally staggered so that, when the first element 16a is in its gripping position (I), the second element 16b is in the release position (II), and vice versa.

As can be seen in the condition shown in Figs. 1 and 2, the two gripping elements 16a and 16b of every assembly 15 are temporally staggered substantially by half a cycle: while the first gripping element 16a is in the release position (II) to release a first wire 11a in correspondence with the welding assembly 13, the second gripping element 16b is in the gripping position (I) to grip a second wire 11b.

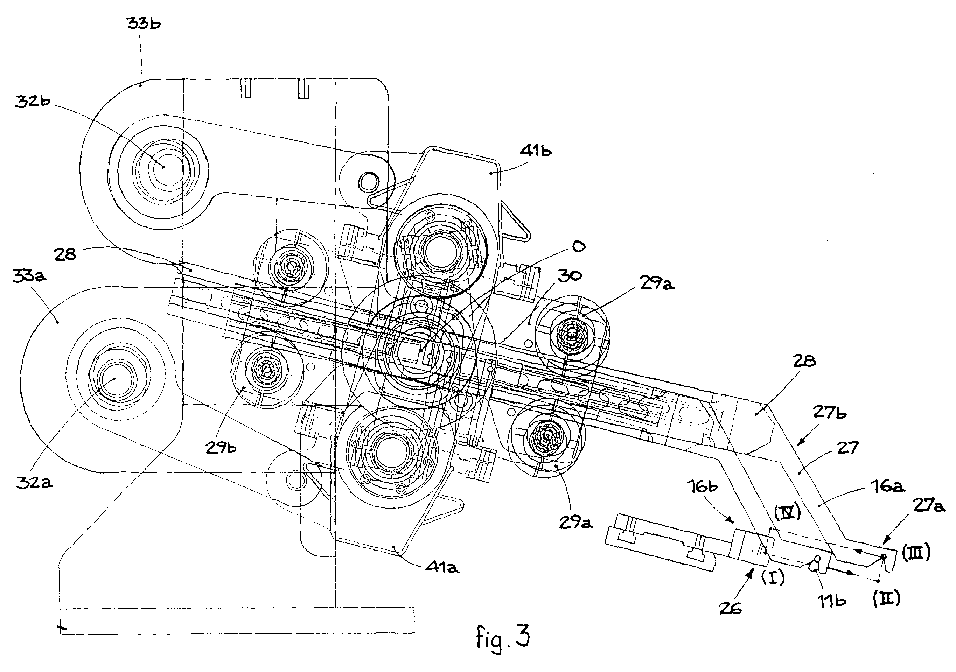

When the wire 11a has been released in the welding position, the first gripping element 16a is raised to a position (III) (Fig. 3) wherein it removes itself from interference with the movement of the second gripping element 16b, which at the same time moves in linear fashion forwards, with the relative second wire 11b, from its gripping position (I) to the release position (II).

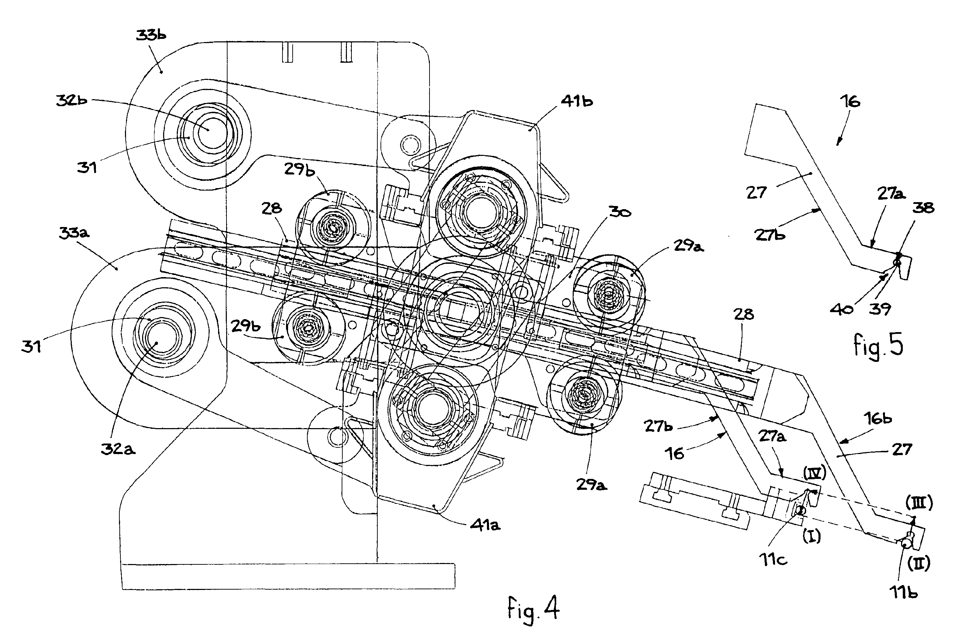

Then, the first gripping element 16a retreats in linear fashion to a position (IV) (Fig. 4), and then is lowered to return to the position (I) wherein it is able to pick up a new wire 11c located in the feed channel 26.

The same movements of lifting, retreat and subsequent lowering are performed in sequence, with a delay of half a cycle, by the second gripping element 16b.

In this way, the dead times connected with repositioning the elements 16 are considerably reduced, and the speed of loading the wires 11 can be drastically increased.

In the embodiment shown, each gripping element 16a, 16b comprises an arm 27 defining at the end a housing seating 40 for the wire 11. The arm 27 comprises a first front segment 27a, substantially horizontal, at the end of which said seating 40 is made, and a second rear oblique segment 27b, the rear end of which is anchored to an extension element 28 consisting of a rod, in this case made of aluminium.

The rod 28 is arranged on a plane substantially parallel to the plane on which the front segment 27a lies and is able to perform a movement of advance/retreat, according to the loading cycle of the wires 11, guided between pairs of idle wheels, front 29a and rear 29b, assembled on a supporting frame 30.

The gripping elements 16 of every assembly 15 are moved by two drive systems, independent and synchronized, able to make the relative gripping elements 16 perform the movements described above. To be more exact, there is a first drive system able to move, according to the sequence described above, the first gripping elements 16a of the assemblies 15 along the loading device 10, and a second drive system able to move the relative second gripping elements 16b of said assemblies.

The drive systems are suitably synchronized so that the relative gripping elements 16a, 16b move with a stagger of half a cycle, as indicated above, and also consist substantially of the same elements, in this case arranged specular with respect to the structure of the loading device 10.

To be more exact, as can be seen in Fig. 2, the drive elements of the first gripping elements 16a are arranged in the lower part of the loading device 10, while the drive elements of the second gripping elements 16b are arranged specular in the upper part of the loading device 10.

The drive elements comprise a respective fork 34, at the end of which, in correspondence with an assembly axis 35, the rod 28, which supports the arm 27 of a relative gripping element 16, is solidly anchored.

As can be seen in Fig. 2, the forks 34 to which the first 16a and respectively the second 16b gripping elements are associated are arranged specular to each other and are staggered lengthwise.

At the opposite end with respect to the position of the rod 28, each of the forks 34 is keyed onto a relative rotation shaft, respectively 37a for the first gripping elements 16a and 37b for the second gripping elements 16b. The shafts 37a, 37b, in this case hexagonal in shape, are driven by a motor 43 and by a transmission mechanism which is not shown here, and in cooperation with the relative forks 34 achieve the linear advance movement of the relative rods 28 from the gripping position to the release position of the transverse wires and vice versa.

It comes within the field of the invention that each shaft 37a, 37b is driven by a respective motor.

To allow the gripping elements 16a, 16b to oscillate upwards and downwards, particularly during the return movement to the pick-up position (I) described above, the supporting frames 30 are oscillating with respect to their center, indicated by "O" in Fig. 1.

The oscillation of the respective supporting frame 30 is obtained thanks to a respective cam mechanism, lower 42a for the first gripping elements 16a, and upper 42b for the second gripping elements 16b.

Each of the cam mechanisms 42a, 42b comprises a respective rotation shaft, lower 32a and upper 32b, to which a relative bushing 31 is terminally associated, able to rotate eccentrically in a seating defined in a respective flange, lower 33a and upper 33b.

Each of the flanges 33a, 33b is solidly associated with a respective plate, respectively lower plate 41a and upper plate 41b, which are substantially specular with respect to each other and extend substantially for the length of the loading device 10; they receive from the respective cam mechanism 42a, 42b a coordinated and cyclical lifting and lowering movement.

The cyclical lifting and lowering movement of the plates 41a and 41b determines the mating oscillation of the whole structure connected thereto, and in particular determines the coordinated oscillation of the supporting frames 30 inside which the rods 28 slide. This oscillation, coordinated with the linear advance movement imparted to the respective shafts 37a, 37b, determines the cyclical travel between the positions, I, II, III and IV as described above.

A possible gripping element 16 according to the invention is shown in Fig. 5. In correspondence with, and behind, the housing seating of the wire, the gripping element 16 has a seating 38 to house a retaining element, which in this case consists of a magnet 39.

The magnet 39 ensures that the transverse wire 11 is retained efficiently and stably when it is picked up from the relative channel 26 and displaced towards the welding position. Once in position, the force of attraction of the magnet 39 is overcome by the jaw-type elements of the welding assembly 13 closed on the wire 11, so that the beginning of the return movement of the gripping elements 16 automatically determines the release of the wire 11.

According to a variant, the retention element consists of an electromagnet which can be activated and de-activated in coordination with the pick-up and release steps of a relative transverse wire 11.

According to further variants which are not shown here, the retention element consists of a mechanical element, such as an elastic hook, a vice or shaped hollow.

Although we have described several preferential embodiments, it is clear that modifications and additions can be made to the invention, without departing from the spirit and scope thereof.

## Claims

1. Loading device for metal wires, used to position at least a metal wire (11) in correspondence with at least an attachment position with at least another metal wire (14), comprising at least a gripping and positioning assembly (15) able to move cyclically from a first position (I) wherein it grips said metal wire (11) to a second position (II) wherein it releases said wire (11) in correspondence with said attachment position, the device being **characterized in that** said gripping and positioning assembly (15) comprises at least a pair of gripping elements (16a, 16b) movable in synchronized fashion on respective planes and able to act on respective transverse wires (11a, 11b), the movement of a first gripping element (16a) being temporally staggered with respect to the movement of said second gripping element (16b).

2. Device as in Claim 1, **characterized in that** each of said gripping elements (16) has a housing seating (40) for the transverse wire (11) and, substantially on the bottom of said seating (40), means (38) to retain said wire.

3. Device as in Claim 2, **characterized in that** said retention means (38) consist of a magnet (39).

4. Device as in Claim 2, **characterized in that** said retention means (38) consist of an electromagnet which can be activated on command.

5. Device as in Claim 1, **characterized in that** said first gripping element (16a) is able to assume said first gripping position (I) to grip a relative wire (11a) substantially when said second gripping element (16b) is able to assume said second release position (II) to release a relative wire (11b).

6. Device as in Claim 1, **characterized in that** it comprises a plurality of said gripping and positioning assemblies (15) movable in synchronized fashion and arranged substantially aligned in the direction defined by the metal wire (11) to be positioned.

7. Device as in Claim 6, **characterized in that** it comprises a first drive system able to move the first gripping elements (16a) of all said assemblies (15) and a second drive system able to move the second gripping elements (16b) of all said assemblies (15).

8. Device as in Claim 7, **characterized in that** each of said drive systems comprises at least a rotation shaft (37a, 37b) able to impart a substantially linear cyclical movement of advance and retreat to the relative gripping elements (16a, 16b) and a cam system (42a, 42b) able to impart to the relative gripping elements (16a, 16b) a cyclical movement of upwards and downwards oscillation coordinated with said substantially linear movement.

9. Device as in Claim 8, **characterized in that** it comprises respective fork means (34) keyed onto the relative rotation shafts (37a, 37b) and on which a relative gripping element (16a, 16b) is able to be assembled.

10. Device as in Claim 9, **characterized in that** each of said fork means (34) is able to support a rod element (28) able to support a relative gripping element (16a, 16b).

11. Device as in Claim 10, **characterized in that** said rod element (28) is able to slide substantially in linear fashion guided between rolling elements (29a, 29b) associated with a supporting frame (30).

12. Device as in Claim 11, **characterized in that** each supporting frame (30) is able to oscillate with respect to its center (O) according to the oscillatory movements transmitted by the relative cam system (42a, 42b).

13. Device as in Claim 12, **characterized in that** each cam system (42a, 42b) is connected to the respective supporting frames (30) by means of at least a relative plate (41a, 41b) which extends substantially over the whole length of the loading device (10).

14. Device as in Claim 7, **characterized in that** the drive systems respectively of the first gripping elements (16a) and the second gripping elements (16b) are substantially identical and are arranged specular with respect to the structure of the loading device (10).

15. Device as in any claim hereinbefore, applied on a machine (20) for forming mesh (18) or metal cage to be used in the building field, **characterized in that** said metal wire to be positioned is a transverse wire (11) able to be attached to a plurality of longitudinal wires (14) advancing step-wise, and that said attachment position is a welding position wherein there is at least a welding assembly (13).

16. Device as in Claim 15, **characterized in that** it comprises at least two feed assemblies (23) to feed a respective transverse wire (11), each able to feed a first transverse wire (11) to be picked up by the first gripping elements (16a) and a second transverse wire (11) to be picked up by the second gripping elements (16b).

17. Method to position a metal wire (11) in correspondence with an attachment position with at least another metal wire (14), which uses at least a gripping and positioning assembly consisting of at least a gripping element able to move cyclically from a first position (I) wherein it grips said metal wire (11) to a second position (II) wherein it positions said wire (11) in correspondence with said attachment position, the method being **characterized in that** it provides that a first gripping element (16a) of said at least one assembly (15) moves from the first position (I) wherein it grips a respective wire (11a) to the second position (II) wherein it positions said wire (11a), while a second gripping element (16b) of said at least one assembly (15) moves from the second position (II) wherein it positions a relative wire (11b) to the first position (I) wherein it grips a new wire (11c).

18. Method as in Claim 17, **characterized in that** a cycle to drive the gripping elements (16a, 16b) provides:
- a substantially linear advance movement of the first gripping element (16a) from the first gripping position (I) to the second position (II) to position a first wire (11);
- a movement of lifting said first gripping element (16a) to move to a position of non-interference (III), while a second gripping element (16b) with a second wire (11) moves from the first gripping position (I) to the second position (II) to position a second wire (11);
- a substantially linear movement of retreat of said first gripping element (16a) from the third position of non-interference (III) to a fourth position (IV), while said second gripping element (16b) is in said position (II) to position said second wire (11); and
- a lowering movement of said first gripping element (16a) to return to the gripping position (I) to grip a third transverse wire (11) to be transferred to the welding position.

19. Method as in Claim 17 or 18, **characterized in that** it provides that the first gripping elements (16a) of all the assemblies (15) are moved by a first drive system comprising at least a relative cam system (42a) and that the second gripping elements (16b) of all the assemblies (15) are driven by a second common drive system comprising at least a relative cam system (42b).

20. Mesh-forming machine comprising at least an assembly (21) to feed longitudinal wires (14), at least an assembly (23) to feed transverse wires (11) and at least a welding assembly (13), also comprising a loading device for said transverse wires (11) able to automatically position at least one transverse wire (11) at a time in correspondence with a position cooperating with said welding assembly (13), the machine being **characterized in that** said loading device (10) comprises a plurality of gripping and positioning assemblies (15) arranged in the direction on which said transverse wire (11) lies, each of said assemblies (15) comprising at least a pair of gripping elements (16a, 16b) movable in synchronized fashion on respective planes and able to act on respective transverse wires (11a, 11b), the movement of a first gripping element (16a) being temporally staggered with respect to the movement of said second gripping element (16b).

21. Machine as in Claim 20, **characterized in that** it comprises at least two loading devices (10) arranged facing each other and each cooperating with a respective transverse wire (11).
